# EUROPÄISCHE PATENTSCHRIFT

(11) **EP 1 576 046 B1**
(45) Veröffentlichungstag und Bekanntmachung des Hinweises auf die Patenterteilung: **05.09.2007**
(21) Anmeldenummer: 03782319.2
(22) Anmeldetag: 06.12.2003
(51) Int. Cl.: C08K 7/06, C08K 7/18, C08K 3/04, H01B 1/24

(54) **LEITFÄHIGE THERMOPLASTE MIT RUSS UND KOHLENSTOFF-NANOFIBRILLEN**
CONDUCTIVE THERMOPLASTICS CONTAINING CARBON BLACK AND CARBON NANOFIBRES
THERMOPLASTIQUES CONDUCTEURS CONTENANT DU NOIR DE CARBONE ET DES NANOFIBRILLES DE CARBONE

(30) Priorität: 19.12.2002 DE 10259498
(43) Veröffentlichungstag der Anmeldung: 21.09.2005
(73) Patentinhaber: LANXESS Deutschland GmbH, 51369 Leverkusen (DE)
(72) Erfinder: BRAIG, Thomas, 40476 Düsseldorf (DE); JOACHIMI, Detlev, 47800 Krefeld (DE); VATHAUER, Marc, 50858 Köln (DE); JESCHKE, Kurt, 40597 Düsseldorf (DE)
(86) Internationale Anmeldenummer: PCT/EP2003/013817
(87) Internationale Veröffentlichungsnummer: WO 2004/056919

(56) Entgegenhaltungen:
- EP-A- 1 052 654
- US-A- 5 484 838
- US-A- 5 643 502
- PATENT ABSTRACTS OF JAPAN vol. 2002, no. 08, 5. August 2002 (2002-08-05) & JP 2002 097375 A (TORAY IND INC), 2. April 2002 (2002-04-02)

## Beschreibung

Die Erfindung betrifft Thermoplaste, enthaltend Kohlenstoff-Nanofibrillen und teilchenförmige Kohlenstoffverbindungen.

Elektrisch leitfähige Kunststoffe werden für eine Vielzahl von Anwendungen benötigt, wobei heute folgende Anwendungen im Vordergrund stehen:
- Verhinderung von antistatischer Aufladung z.B. bei Verpackungen, bei Dosiersystemen für Aerosole, Pulver oder Flüssigkeiten und z.B. bei Elektronikbauteilen wie Chip-Trägem, wo aus Sicherheitsgründen die elektrostatische Aufladung verhindert werden muss.
- Elektromagnetische Abschirmung von elektrischen Geräten und elektronischen Baugruppen, z.B. in der Kfz-, EDV-, Nachrichten- und Kommunikationstechnik.
- Nutzung der elektrochemischen Reversibilität der selbstleitenden Kunststoffe z.B. für Polymerbatterien oder Elektroden.
- Nutzung der elektrischen Leitfähigkeit, z.B. Potentialsteuerung im Kabel, stromabhängige Schaltelemente, Heizelemente oder für die elektrostatische Lackierung von Kunststoffteilen. Die elektrostatische Lackierung hat sich in den letzten Jahren in sehr vielen Bereichen, insbesondere in der Kfz-Industrie, durchgesetzt. Grundvoraussetzung der elektrostatischen Lackierung ist die Möglichkeit elektrische Ladungen auf die zu lackierenden Formteile aufbringen zu können. Dies ist bei Metallen leicht, bei üblichen Thermoplasten wegen deren geringer Leitfähigkeit aber normalerweise nicht in ausreichendem Maße möglich.

Bei vielen dieser genannten Anwendungen wie insbesondere z.B. zur Verhinderungen der statischen Aufladung, der elektrostatischen Lackierung oder elektromagnetischen Abschirmung kann die geforderte Oberflächenleitfähigkeit durch Aufbringen einer leitfähigen Schicht hergestellt werden, wie z.B. durch Metallisierung, Aufdampfen von Metall, Lackierung oder Primern mit einem leitfähigen Lack bzw. Primer. Die Applikation der leitfähigen Oberfläche ist jedoch arbeits- und kostenaufwendig, bietet zusätzliche Fehlerquellen und ist nicht für alle Geometrien problemlos anwendbar, so dass ein starkes Bedürfnis nach leitfähigen Kunststoffen besteht, die alternativ zu diesen Oberflächenveredelungen eingesetzt werden können.

Bei der elektrostatischen Lackierung im Kfz-Bereich wird beispielsweise durch Einsatz von sogenannten Primern mit Leitfähigkeitsadditiven, die vor der elektrostatischen Lackierung auf die Kunststoffformteile appliziert werden, die notwendige Leitfähigkeit hergestellt. Die dabei entstehende leitfähige Schicht vermittelt gleichzeitig die Haftung vom Kunststoff zum Lack. Auch hier sind Prozessvereinfachung und -verkürzung, Verminderung von Fehlerquellen und Kosteneinsparung durch Einsparung des elektrostatischen Primers die Hauptgründe für die Nachfrage nach elektrisch leitfähigen Kunststoffen.

Zur Herstellung leitfähiger Thermoplaste werden üblicherweise leitfähige Substanzen wie z.B. Ruß, Kohlefaser, Graphit, Metallfasern und -pulver; metallisierte Glasfasern oder leitfähige Polymere mit konjugiertem Elektronensystem wie beispielsweise Polyanilin, Poly-*para*-phenylenvinylen oder Polythiaphen eingesetzt.

Neben der Leitfähigkeit werden insbesondere bei Anwendungen im Kfz-Bereich auch hohe Anforderungen wie z.B. hinsichtlich erstklassiger Oberflächenqualität, hohe Zähigkeit, geringe Dichte, hohe Fließfähigkeit und geringen Preis an die Thermoplaste gestellt. Als Leitfähigkeitsadditiv wird für Thermoplaste häufig Kohlenstoff in verschiedenen Modifikationen wie zum Beispiel Ruß, Kohlefasern, Graphit oder Nanographit eingesetzt.

Durch Einsatz von Ruß und Kohlefasern kommt es wegen der hohen benötigten Konzentration häufig zur Verschlechterung der Oberflächenqualität, der Zähigkeit (z.B. durch beschleunigte Kristallisation bei teilkristallinen Thermoplasten) und der Fließfähigkeit (z.B. durch Thixotropie), weil vergleichsweise hohe Rußkonzentrationen für die geforderten Leitfähigkeiten notwendig sind (R.G. Gilg, "Ruß für leitfähige Kunststoffe" in: Elektrisch leitende Kunststoffe, Hrsg.: H.J. Mair, S. Roth, 2. Aufl., Carl Hanser Verlag, 1989, München, Wien, S. 21 - 36).

Durch Einsatz von Kohlenstoff-Nanofibrillen, wie er beispielsweise von der Fa. Hyperion Catalysis angeboten wird, müssen nur vergleichsweise geringe Mengen zugesetzt werden, um ausreichende Leitfähigkeiten zu erzielen (US-A 5643502, WO-A 01/36536). Allerdings ist die homogene Dispergierung der Kohlenstoff-Nanofibrillen in der Polymermatrix sehr schwierig, da Nanographit zu Aggregatbildung neigt. Dies limitiert den Einsatz von Nanographit bzw. Kohlenstoff-Nanofibrillen stark und erfordert wesentlich den Einsatz von Masterbatchen. Zusätzlich ist die Verfügbarkeit des Nanographits bzw. Kohlenstoff-Nanofibrillen durch den aufwendigen und sehr teuren Herstellungsprozess stark eingeschränkt.

Die Aufgabe bestand daher darin, leitfähige Thermoplasten herzustellen, die eine erstklassige Oberflächenqualität, hohe Zähigkeit, geringe Dichte, hohe Fließfähigkeit besitzen. Insbesondere sollten Formmassen entwickelt werden, die für Anwendungen zur elektrostatischen Lackierung im Kfz-Innen- und Außenbereich und/oder für Anwendungen zur Verhinderung der antistatischen Aufladung geeignet sind.

Die Additivierung von Thermoplasten mit verschieden Modifikationen des Kohlenstoffs zur Herstellung von Leitfähigkeit ist in der Literatur bekannt, z.B. teilchenförmige Kohlenstoffverbindungen wie Ruße oder Graphitpulver oder faserförmige Kohlenstoffmodifkationen So sind die Herstellung und die Eigenschaften von Leitfähigkeitsrußen und die für die gewünschte Leitfähigkeit benötigte Rußkonzentration seit langem bekannt (R.G. Gilg, "Ruß für leitfähige Kunststoffe" in: Elektrisch leitende Kunststoffe, Hrsg.: H.J. Mair, S. Roth, 2. Aufl., Carl Hanser Verlag, 1989, München, Wien, S. 21 - 36). Der Einsatz von Ruß in Thermoplasten zur Herstellung der Leitfähigkeit für elektrostatisch lackierbare thermoplastische Formteile für Anwendungen im Kfz-Bereich wird ferner in US-A 5484838 beschrieben.

Neben teilchenförmigen Kohlenstoffverbindungen können auch Kohlenstofffasern, Kohlenstoff-Nanofibrillen eingeschlossen, als Leitfähigkeitsadditive zugesetzt werden. In US-A 5643502 wird die Herstellung von Kohlenstoff-Nanofibrillen beschrieben, sowie deren Einarbeitung in Thermoplaste wie Polyamid, Polycarbonat oder Polyester zu Masterbatchen oder Formmassen. Im bevorzugten Bereich werden zwischen 2 und 5 Gew.-% des Nanographit bzw. Kohlenstoff-Nanofibrillen zur Herstellung leitfähiger thermoplastischer Formmassen, die sich trotz Leitfähigkeit durch sehr gute Schlagzähigkeit auszeichnen. In WO-A 01/36536 wird der Einsatz von Kohlenstoff-Nanofibrillen in Polyamid-Polyphenylenether-Blends zur Herstellung leitfähiger thermoplastischer Formmassen beschrieben. Aus EP-A-1 052 654 sind auf Polyolefinen basierende Zusammensetzungen enthaltend Graphit und Carbon Nanotubes zum Einsatz in halbleitenden Kabelummantelungen bekannt. Aus US-A 5 484 838 und JP 2002 097 375 A sind Zusammensetzungen bekannt, die keinen partikelförmigen Kohlenstoff enthalten.

Es wurde nun überraschend gefunden, dass bei gleichzeitigem Einsatz von Kohlenstoff-Nanofibrillen und teilchenförmigem Kohlenstoffverbindungen ein Eigenschaftsprofil erhalten wird, bei dem gute Fließfähigkeit mit niedrigem Oberflächenwiderstand kombiniert werden. Dabei werden leitfähige Formmassen erhalten, die sich darüber hinaus durch sehr gute Oberflächenqualität und hohe Zähigkeit auszeichnen.

Die erfindungsgemäßen Formmassen eignen sich beispielsweise hervorragend zur elektrostatischen Lackierung oder zum Einsatz in Anwendungen, in denen eine elektrostatische Aufladung verhindert werden soll.

Gegenstand der Erfindung sind Zusammensetzungen, enthaltend
A) 99,6 bis 10, bevorzugt 99,5 bis 40, bevorzugter 99,0 bis 55 Gew.-Teile mindestens eine Thermoplasten
B) 0 bis 50, vorzugsweise 0 bis 35, vorzugsweise 2 bis 35, besonders bevorzugt 5 bis 25 Gew.-Teile mindestens eines kautschukelastischen Polymerisats,
C) 0,2 bis 10,0, vorzugsweise 0,5 bis 5,0, besonders bevorzugt 1,0 bis 3,0, am meisten bevorzugt 1,5 bis 2,5 Gew.-Teile Kohlenstofffasern oder Kohlenstoff-Nanofibrillen,
D) 0,2 bis 10,0, vorzugsweise 0,5 bis 8,0, besonders bevorzugt 1,0 bis 5,0, am meisten bevorzugt 1,5 bis 4,0 Gew.-Teile mindestens einer teilchenförmigen Kohlenstoffverbindung, bevorzugt Ruß oder Graphitpulver, die als Leitfähigkeitsaddititv geeignet ist,
E) 0 bis 50, vorzugsweise 2 bis 40, besonders bevorzugt 5 bis 30 Gew.-Teile mindestens eines Füllstoffes und/oder Verstärkungsstoffes, dadurch gekennzeichnet, dass als Thermoplast Polycarbonate, Polyamide, Polyester oder Mischungen aus zwei dieser Thermoplaste, bevorzugt eine Mischung aus Polyalkylenterephthalat und Polycarbonat eingesetzt wird.

Als Komponente A enthalten die Zusammensetzungen erfindungsgemäß als Thermoplasten Polycarbonate, Polyamide wie beispielsweise Polyamid 6 oder Polyamid 6,6, Polyester wie beispielsweise Polyalkylenterephthalate, z.B. Polybutylenterephthalat oder Polyethylenterephthalat. Erfindungsgemäß können bevorzugt auch eine Mischung aus zwei oder mehreren Thermoplasten als Komponente A eingesetzt werden. Besonders bevorzugt sind Mischungen die Polycarbonat und Polyester umfassen, wie beispielsweise Polycarbonat/Polybutylenterephthalat-Blends oder Polycarbonat/Polyethylenterephthalat-Blends.

Bevorzugt werden als Komponente A Polyamide eingesetzt. Die erfindungsgemäßen Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden. Geeignet sind auch Blends mit Anteilen von anderen Polymeren z.B. von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt ε-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Die erfindungsgemäß hergestellten Polyamide können auch im Gemisch mit anderen Polyamiden und/oder weiteren Polymeren eingesetzt werden.

Den Polyamiden können übliche Additive wie z.B. Entformungsmittel, Stabilisatoren und/oder Fließmittel in der Schmelze zugemischt oder auf der Oberfläche aufgebracht werden.

Ebenfalls bevorzugt können als Komponente A teilaromatische Polyester eingesetzt werden. Der erfindungsgemäßen teilaromatische Polyester sind ausgewählt aus der Gruppe Derivate der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalat, ganz besonders bevorzugt des Polybutylenterephthalats.

Unter teilaromatischen Polyestern versteht man Materialien, die neben aromatischen Molekülteilen auch aliphatische Molekülteile enthalten

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan,2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der oben genannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,5, vorzugsweise 0,5 bis 1,3, jeweils gemessen in Phenol/o-Dichlorbenzol (1:1 Gew.-Teile) bei 25°C.

Die erfindungsgemäß hergestellten Polyester können auch im Gemisch mit anderen Polyestern und/oder weiteren Polymeren eingesetzt werden.

Den Polyestern können übliche Additive wie z.B. Entformungsmittel, Stabilisatoren und/oder Fließmittel in der Schmelze zugemischt oder auf der Oberfläche aufgebracht werden.

Ebenfalls bevorzugt können als Komponente A erfindungsgemäß Polycarbonate oder eine Mischung von Polycarbonaten eingesetzt werden.

Bevorzugte Polycarbonate sind solche Homopolycarbonate und Copolycarbonate auf Basis der Bisphenole der allgemeinen Formel (I),

HO-Z-OH (I)

worin
- Z: ein divalenter organischen Rest mit 6 bis 30 C-Atomen ist, der eine oder mehrere aromatische Gruppen enthält.

Bevorzugt sind Bisphenole der Formel (Ia) 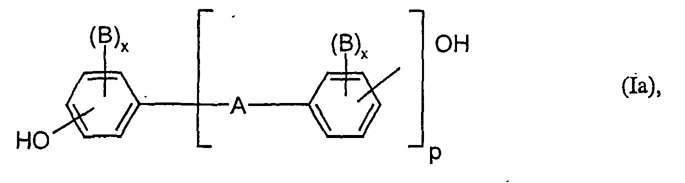 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 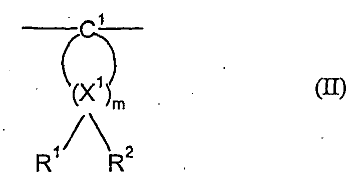 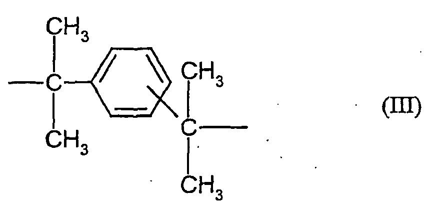
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cyclo-alkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4-hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d.h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635. 1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (M̅_{w}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse (M̅_{w}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktur-einheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxy-endgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekennzeichnet, dass sie in der Polymerkette einerseits aromatische Carbonatstruktur-Einheiten (1) und andererseits Aryloxyendgruppen-haltige Polydiorganosiloxane (2) enthalten, 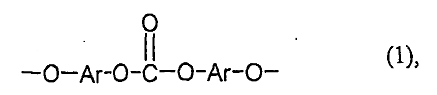 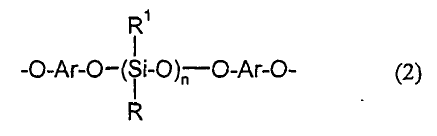 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten und
- n: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in vorstehender Formel (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung werden zum Beispiel in US-A 3 189 662, US-A 3 821 325 und US-A 3 832 419 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten könne übliche Additive wie z.B. Entformungsmittel, Stabilisatoren und/oder Fließmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als Komponente A können erfindungsgemäß ausdrücklich auch Kombinationen aus verschiedenen Thermoplasten eingesetzt werden wie beispielsweise bevorzugt PC/Polyalkylenterephthalat, PC/PBT, PC/PET, PBT/PA, PET/PA, PBT/PS, PET/ES, PA/PS. Besonders bevorzugt sind die Mischungen PC/Polyalkylenterephthalat wie PC/PBT und PC/PET. Am meisten bevorzugt sind Mischungen aus PC/Polyalkylenterephthalat wie PC/PBT und PC/PET bei denen das GewichtsVerhältnis PC : Polyalkylenterephthalat im Bereich 3:1 bis 1:3, bevorzugt im Bereich 1:1 bis 1:2,5 liegt.

Als Komponente B) enthalten die Zusammensetzungen erfindungsgemäß ein oder eine Mischung aus zwei oder mehr unterschiedlichen kautschukelastischen Polymerisaten mit einer Glasübergangstemperatur unter -5°C, bevorzugt unter -15°C, bevorzugter unter -30°C, am meisten bevorzugt unter -50°C, die oft auch als Schlagzähmodifikatoren, Elastomere oder Kautschuke bezeichnet werden.

Bei der erfindungsgemäßen Komponente B) handelt es sich allgemein um Copolymerisate, bevorzugt um Propfcopolymerisate aus mindestens zwei, bevorzugt drei der folgenden Monomere: Styrol, Acrylnitril, Butadien, Acryl- bzw. Methacrylsäureester von Alkohlen mit 1 bis 18 C-Atomen als Alkoholkomponente, Vinylacetat, Ethylen, Propylen, 1,3-Butadien, Isobuten, Isopren und/oder Chloropren. Derartige Polymerisate der Komponente D) werden z.B. in Methoden der Organischen Chemie" (Houben-Weyl), Bd. 14/1, Georg Thieme-Verlag, Stuttgart 1961, S. 392-406 und in C.B. Bucknall, "Thoughened Plastics", Appl. Science Publishers, London 1977, beschrieben. Bei den Pfropfcopolymerisaten wird auf einen Kern mindestens eine äußere Schale aufgepfropft.

Bevorzugt als Komponente B) eingesetzte Propfcopolymerisate werden beispielsweise durch Propfreaktion von Styrol, Acrylnitril und/oder Methylmethacrylat auf eine Pfropfgrundlage von 1,3-Butadien, Isopren, n-Butylacrylat, Styrol und/oder 2-Ethylhexylacrylat, bevorzugter durch Pfropfreaktion von Acrylnitril, Styrol und/oder Methylmethacrylat auf eine Pfropfgrundlage von 1,3-Butadien, Isopren, n-Butylacrylat, Styrol und/oder 2-Ethylhexylacrylat erhalten.

Erfindungsgemäß besonders bevorzugt sind Pfropfcopolymere, bei denen Methylmethacrylat oder eine Mischung von Methylmethacrylat und Styrol auf eine Pfropfgrundlage auf 1,3-Butadienbasis oder auf eine Pfropfgrundlage aus einer Mischung aus 1,3-Butadien und Styrol aufgepfropft werden, die auch als MBS-(Methylmethacrylat-Butadien-Styrol)-Kautschuke bezeichnet werden. Erfindungsgemäß besonders bevorzugt sind ebenfalls Pfropfcopolymere, bei denen Acrylnitril oder eine Mischung von Acrylnitril und Styrol auf eine Pfropfgrundlage auf 1,3-Butadienbasis oder auf eine Pfropfgrundlage aus einer Mischung aus 1,3-Butadien und Styrol aufgepfropft werden, die auch als ABS-(Acrylnitril-Butadien-Styrol)-Kautschuke bezeichnet werden.

Bevorzugt werden als Komponente B) auch Pfropfcopolymere eingesetzt, bei denen n-Butylacrylat, n-Butylmetacrylat, Ethylacrylat, Methylacrylat, 1,3-Butadien, Isopren und/oder 2-Ethylhexylacrylat auf eine Pfropfgrundlage aus von 1,3-Butadien, Isopren, n-Butylacrylat, Styrol und/oder 2-Ethylhexylacrylat aufgepfropft werden.

Ausdrücklich können die Monomermischungen, die auf die Pfropfgrundlage aufgepfropft werden, auch mit zusätzlichen reaktiven Gruppen, wie beispielsweise Epoxy- bzw. Glycidyl-, Carboxyl-, Carbonsäureanhydrid-, Amino- und/oder Amid-Gruppen, funktionalisierte Monomere mit eine ethylenischen Doppelbindung umfassen, wie beispielsweise Acylamid, Methacrylamid, (N,N-Dimehtylamino)ethylacrylat, bevorzugt Maleinsäure, Fumarsäure, Maleinsäureanhydrid, Allylglycidylether, Vinylglycidylether, Glycidylacrylat, Glycidylmetacrylat.

Erfindungsgemäß können auch vernetztende Monomere in die Propfgrundlage und/oder in äußere Schalen einpolymerisiert werden, wie beispielsweise Divinylbenzol, Diallylphthalat, Dihydrodicyclopentadienacrylat und/oder 1,3-Butadien.

Ferner können auch sogenannte pfropfvernetzende Monomere eingesetzt werden, die mindestens zwei polymerisierbare Doppelbindungen besitzen, wobei die Doppelbindungen bei der Polymerisation mit verschiedenen Geschwindigkeiten polymerisieren. Vorzugsweise polymerisiert eine Doppelbindung mit etwa der Geschwindigkeit wie die übrigen Monomere, die andere bzw. anderen Doppelbindung dagegen deutlich langsamer, so dass daraus ein gewisser Anteil an Doppelbindungen im Kautschuk resultiert. Beim Aufpfropfen einer weiteren Phase können Teile dieser Doppelbindungen mit den Pfropfmonomeren reagieren und die aufgepfropfte Phase somit partiell chemisch an die Propfgrundlage binden. Beispielsweise seien hier ethylenisch ungesättigte Carbonsäureester wie Allylacrylat, Allylmethacrylat, Diallymaleat, Diallylfumarat oder in US-A 4 148 846 genannte Verbindungen genannt.

Darüber hinaus umfasst Komponente B) bevorzugt ein oder eine Mischung aus zwei oder mehr unterschiedlichen Pfropfpolymerisaten mit einer Pfropfgrundlage auf Basis von Acrylaten mit einer Glasübergangstemperatur von unter -5°C (solche Pfropfpolymerisate werden im allgemeinen als Acrylatkautschuke bezeichnet und sind dem Fachmann bekannt) oder ein oder eine Mischung aus zwei oder mehr unterschiedlichen elastischen Blockpolymeren, insbesondere Zwei- oder Dreiblockcopolymere auf Basis von Vinylaromaten und Dienen, oder Mischungen aus Pfropfpolymerisaten und elastischen Blockpolymeren.

Die eben genannten ebenfalls bevorzugt als Komponente B) einsetzbaren Acrylatkautschuke umfassen bevorzugt Pfropfcopolymerisate mit kautschukelastischen Eigenschaften, die im wesentlichen aus mindestens 2 der folgenden Monomeren erhältlich sind: (Meth)-Acrylsäureester mit 1 bis 18 C-Atomen in der Alkoholkomponente, Chloropren, Butadien-1,3, Isopropen, Styrol, Acrylnitril, Ethylen, Propylen und Vinylacetat, wobei die Pfropftbasis mindestens einen (Meth)Acrylsäureester enthält, also Polymerisate, wie sie z.B. ebenfalls in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind.

Bevorzugte Polymerisate B) sind partiell vernetzt und besitzen Gelgehalte von über 5 Gew.-%, bevorzugt 20 Gew.-%, vorzugsweise über 40 Gew.-%, insbesondere über 60 Gew.-%.

Bevorzugte Acrylatkautschuke als Komponente B) sind Pfropfcopolymerisate enthaltend
B.1) 95 bis 5, vorzugsweise 10 bis 80 Gew.-%, bezogen auf Komponente B, Pfropfauflage basierend auf mindestens einem polymerisierbaren, ethylenisch ungesättigten Monomeren als Pfropfmonomere und
B.2) 5 bis 95, vorzugsweise 20 bis 90 Gew.-%, bezogen auf Komponente B, Acrylatkautschuk mit einer Glasübergangstemperatur <-10°C, vorzugsweise <-20°C als Pfropfgrundlage. Besonders bevorzugt können B.2) Polymerisate aus Acrylsäureestern oder Methacrylsäureestern enthalten, die bis zu 40 Gew.-%, bezogen auf B.2) andere ethylenisch ungesättigte Monomere enthalten können.

Die Acrylatkautschuke gemäß D.2 sind vorzugsweise Polymerisate aus Acrylsäurealkylestern oder Meth-Acrylsäurealkylestem, gegebenenfalls mit bis zu 40 Gew.-%, bezogen auf D.2, anderen polymerisierbaren, ethylenisch ungesättigten Monomeren. Zu den bevorzugten Acrylsäureestern oder Meth-Acrylsäureestern gehören C₁-C₈-Alkylester, insbesondere Methyl-, Ethyl-, Butyl-, n-Octyl- und 2-Ethylhexyl-ester; sowie Halogenalkylester, vorzugsweise Halogen-C₁-C₈-alkyl-ester, wie Chlor-ethylacrylat, sowie Mischungen dieser Monomeren.

Acrylsäurealkylester und Methacrylsäureester sind vorzugsweise Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Pfropfmonomere der Pfropfauflage D.1. sind vorzugsweise ausgewählt aus mindestens einem Monomer, vorzugsweise 2 oder 3 Monomeren der Gruppe bestehend aus Styrol, α-Methylstyrol, halogen- oder methylkernsubstituierten Styrolen, (Meth)Acrylsäure-C₁-C₈-alhylester, Acrylnitril, Methacrylnitril, Maleinsäureanhydrid, C₁-C₄-Alkyl- bzw. phenyl-N-substituierten Maleinimiden oder Mischungen hieraus.

Besonders bevorzugte Pfropfcopolymerisate B) umfassen Pfropfpolymerisate aus:
B.1) 5 bis 95, vorzugsweise 10 bis 80, insbesondere 30 bis 80 Gew.-Teile, einer Mischung aus
   B.1.1 50 bis 99, vorzugsweise 65 bis 90 Gew.-% Methylmethacrylat, Styrol, α-Methylstyrol, halogen- oder methylkernsubstituierten Styrolen oder Mischungen dieser Verbindungen und
   B.1.2 1 bis 50, vorzugsweise 35 bis 10 Gew.-% Methylmethacrylat, Acrylnitril, Methacrylnitril, Maleinsäureanhydrid, C₁-C₄-alkyl- bzw. -phenyl-N-substituierten Maleinimiden oder Mischungen dieser Verbindungen auf
B.2) 5 bis 95, vorzugsweise 20 bis 90, insbesondere 20 bis 70 Gew.-Teilen Polymerisat auf Alkylacrylat-Basis mit einer Glasübergangstemperatur unter -10°C, vorzugsweise kleiner -20°C,
wobei die Summe der Gewichtsteile aus B.1) und B.2) 100 ergibt.

Insbesonders sind Pfropfcopolymerisate B) bevorzugt, die erhältlich sind durch Pfropfreaktion von
- α: 10 bis 70, vorzugsweise 15 bis 50, insbesondere 20 bis 40 Gew.-%, bezogen auf Pfropfpolymisat D, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage D.1 auf
- β: 30 bis 90, vorzugsweise 50 bis 85, insbesondere 60 bis 80 Gew.-%, bezogen auf Pfropfcopolymerisat B), eine Pfropfgrundlage B.2), die 70 bis 100 Gew.-% mindestens eines Alkylacrylates mit 1 bis 8 C-Atomen im Alkyrest, vorzugsweise n-Butylacrylat und/oder Methyl-n-Butylacrylat und/oder 2-Ethyl-hexylacrylat, insbesondere n-Butylacrylat als alleiniges Alkylacrylat, 0 bis 30, vorzugsweise 0 bis 15 Gew.-% eines weiteren copolymerisierbaren monoethylenisch ungesättigten Monomeren, wie Bütadien, Isopren. Styrol, Acrylnitril, Methylmethacrylat oder Vinylmethylether oder deren Mischungen, 0 bis 5 Gew.-% eines copolymerisierbaren, polyfunktionellen, vorzugsweise bi- und trifunktionellen, die Vernetzung bewirkenden Monomeren, wobei sich die Gewichtsangaben auf das Gesamtgewicht der Pfropfgrundlage beziehen.

Bevorzugte Pfropfpolymerisate B) auf Basis von Acrylatkautschuken sind z.B. mit (Meth)-Acrylsäurealkylestern und/oder Styrol und/oder Acrylnitril gepfropfte Grundlagen B.2). Acrylatkautschuke auf n-Butylacrylatbasis sind als Pfropfbasis B.2) besonders bevorzugt.

Besonders bevorzugte Pfropfpolymerisate B) auf Basis von Acrylatkautschuken sind insbesondere solche, die weniger als 5 Gew.-% Polystyroleinheiten, bevorzugt weniger als 1 Gew.-% Polystyroleinheiten bezogen auf das Gesamtgewicht des Pfropfes, insbesondere bevorzugt keine Polystyroleinheiten enthalten.

Die Komponente B) kann auch eine Mischung verschiedener Pfropfcopolymerisate sein.

Der Gelanteil der Pfropfgrundlage β beträgt im allgemeinen mindestens 20 Gew.-%, vorzugsweise 40 Gew.-% (in Toluol gemessen) und der Pfropfgrad G im allgemeinen 0,15 bis 0,55.

Der mittlere Teilchendurchmesser des Pfropfcopolymerisats der Komponente B) beträgt bevorzugt 0,01 bis 2 µm, bevorzugter 0,05 bis 1,0, besonders bevorzugt 0,1 bis 0,08, insbesondere 0,1 bis 0,4 µm.

Der mittlere Teilchendurchmesser wird beispielsweise an elektronenmikroskopischen Aufnahmen (TEM) von Ultra-Dünnschnitten der erfindungsgemäßen Formmassen, mit OsO₄ und RuO₄ behandelt, durch Ausmessen einer repräsentativen Menge (ca. 50) von Partikeln bestimmt.

Die mittlere Teilchengröße d₅₀ bestimmt mittels Ultrazentrifugation (W. Scholtan, H. Lange, Kolloid, Z. und Z. Polymere 250 (1972), 782-796) ist der Durchmesser oberhalb und unterhalb dessen jeweils 50 Gew.-% der Teilchen liegen. Die mittlere Teilchengröße d₅₀ der Pfropfpolymerisate B) beträgt bevorzugt 0,1 bis 0,6 µm.

Der Gelgehalt der Pfropfgrundlage D.2 wird bei 25°C in Dimethylformamid bestimmt (M. Hoffmann, H. Krömer, R. Kuhn, Polymeranalytik I und II, Georg Thieme-Verlag, Stuttgart 1977).

Der Pfropfgrad G bezeichnet das Gewichtsverhältnis von aufgepfropften Pfropfmonomeren zur Pfropfgrundlage und ist dimensionslos.

Zur Vernetzung bevorzugt der Polymerisate B) auf Basis von Acrylatkautschuken können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat. Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen. Besonders bevorzugte vernetzende Monomere sind die cyclischen Monomere Triallylcyanurat, Triallylisocyanurat, Trivinylcyanurat, Triacryloylhexahydro-s-triazin, Triallylbenzole, Acrylsäureester des Tricyclodecenylalkohols.

Die Menge der vernetzenden Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Die Pfropfpolymerisate B) können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B) auch solche Produkte verstanden, die durch Polymerisation der Pfropfmonomere in Gegenwart der Pfropfgrundlage gewonnen werden.

Die Pfropfpolymerisate B) werden bevorzugt in kompaktierter Form eingesetzt.

Die erfindungsgemäße Komponente B) umfasst weiterhin Blockpolymere mit kautschukelastischen Eigenschaften, insbesondere zum Beispiel Zwei- (A-B) und Dreiblockcopolymere (AB-A). Blockcopolymere des Typs A-B und A-B-A können typisches Verhalten thermoplastischer Elastomere zeigen. Die bevorzugten Blockcopolymere des Typs A-B und A-B-A enthalten ein oder zwei vinylaromatische Blöcke (besonders bevorzugt basierend auf Styrol) und einen Kautschuk-Block (besonders bevorzugt ein Dien-Kautschuk-Block, am meisten bevorzugt ein Polybutadien-Block oder Isopren-Block), die insbesondere gegebenenfalls auch teilweise oder vollständig hydriert sein können.

Geeignete Blockcopolymere des Typs A-B und A-B-A sind z.B. beschrieben in US-A 3 078 254, 3 402 159, 3 297 793, 3 265 765 und 3 594 452 und in GB-A 1 264 741. Beispiele typischer Blockcoplymere des Typs A-B und A-B-A sind: Polystyrol-Polybutadien (SBR), Polystyrol-Poly(ethylen-propylen), Polystyrol-Polyisopren, Poly(ε-Methylstyrol)-Polybutadien, Polystyrol-Polybutadien-Polystyrol (SBR), Polystyrol-Poly(ethylen-propylen)-Polystyrol, Polystyrol-Polyisopren-Polystyrol und Poly(ε-Methylstyrol)-Polybutadien-Poly(ε-Methylstyrol), sowie hydrierte Versionen davon wie zum Beispiel und bevorzugt hydriertes Polystyrol-Polybutadien-Polystyrol (SEBS) und hydriertes Polystyrol-Polyisopren (SEP). Die Verwendung entsprechender hydrierter Blockcopolymerisate gegebenenfalls im Gemisch mit der nicht hydrierten Vorstufe als Schlagzähmodifier ist beispielweise beschrieben in DE-A 2 750 515, DE-A 2 434 848, DE-A 038 551, EP-A 0 080 666 und WO-A 83/01254. Auf die Offenbarung der genannten Druckschriften wird hiermit ausdrücklich Bezug genommen.

Mischungen der erwähnten Blockpolymere können ebenfalls eingesetzt werden.

Besonders bevorzugt sind teilweise oder vollständig hydrierte Blockcopolymere, insbesondere bevorzugt sind hydriertes Polystyrol-Polybutadien-Polystyrol (SEBS) und hydriertes Polystyrol-Polyisopren (SEP).

Solche Blockpolymere des Typs A-B und A-B-A sind kommerziell aus einer Reihe von Quellen erhältlich, wie z.B. von Phillips Petroleum unter dem Handelsnamen SOLPRENE, von Shell Chemical Co. unter dem Handelsnamen KRATON, von Dexco unter dem Handelsnamen VECTOR und von Kuraray unter dem Handelsnamen SEPTON.

Die Komponente B umfasst weiterhin auch ein oder mehrere kautschukmodifizierte Pfropfpolymerisate. Das kautschukmodifizierte Pfropfpolymerisat B umfasst ein statistisches (Co)polymerisat aus Vinylmonomeren B.1, vorzugsweise gemäß B.1.1 und B.1.2, sowie einen mit Vinylmonomeren, vorzugsweise gemäß B.1.1 und B.1.2 gepfropften Kautschuk B.2. Die Herstellung von B erfolgt in bekannter Weise durch radikalische Polymerisation, z.B. nach einem Emulsions-, Masse- oder Lösungs- oder Masse-Suspensions-Polymerisationsverfahren , wie z.B. in den US-A 3 243 481, US-A 3 509 237, US-A 3 660 535, US-A 4 221 833 und US-A 4 239 863 beschrieben. Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 erhältlich sind.

Bevorzugt sind ein oder mehrere Pfropfpolymerisate von 5 bis 95, vorzugsweise 20 bis 90 Gew.-% wenigstens eines Vinylmonomeren B.1 auf 95 bis 5, vorzugsweise 80 bis 10 Gew.-% einer oder mehrerer Pfropfgrundlagen B.2 mit Glasübergangstemperaturen < 10°C, vorzugsweise <-10°C.

Bevorzugte Monomere B.1.1 sind Styrol, α-Methylstyrol, halogen- oder alkylkernsubstituierte Styrole wie p-Methylstyrol, p-Chlorstyrol, (Meth)acrylsäure-C₁-C₈-alkylester wie Methylmethacrylat, n-Butylacrylat und tert.-Butylacrylat. Bevorzugte Monomere B.1.2 sind ungesättigte Nitrile wie Acrylnitril, Methacrylnitril, (Meth)Acrylsäure-C₁-C₈-alkylester wie Methylmethacrylat, n-Butylacrylat, tert.-Butylacrylat, Derivate (wie Anhydride und Imide) ungesättigter Carbonsäuren wie Maleinsäureanhydrid und N-Phenyl-maleinimid oder Mischungen davon.

Besonders bevorzugte Monomere B.1.1 sind Styrol, α-Methylstyrol und/oder Methylmethacrylat, besonders bevorzugte Monomere B.1.2 sind Acrylnitril, Maleinsäureanhydrid und/oder Methylmethacrylat.

Besonders bevorzugte Monomere sind B.1.1 Styrol und B.1.2 Acrylnitril.

Für die kautschukmodifizierten Pfropfpolymerisate B geeignete Kautschuke B.2 sind beispielsweise Dienkautschuke, Acrylat-, Polyurethan-, Silikon-, Chloropren- und Ethylen/Vinylacetat-Kautschuke. Ebenso sind Komposite aus verschiedenen der genannten Kautschuke als Pfropfgrundlagen geeignet.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Vinylmonomeren (z.B. gemäß B.1.1 und B.1.2), mit der Maßgabe, dass die Glasübergangstemperatur der Komponente B.2 unterhalb 10°C, vorzugsweise unterhalb -10°C liegt. Besonders bevorzugt wird reiner Polybutadienkautschuk. Weitere copolymerisierbare Monomere können bis zu 50 Gew.-%, vorzugsweise bis zu 30, insbesondere bis zu 20 Gew.-% (bezogen auf die Kautschukgrundlage B.2) in der Kautschukgrundlage enthalten sein.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; halgoenalkylester, vorzugsweise Halogen-C₁-C₈-alkylester, wie Chlorethylacrylat sowie Mischungen dieser Monomeren.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide; Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und

DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag,

Stuttgart 1977).

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.-%, vorzugsweise weniger als 2 Gew.-%, bezogen auf B.2, vernetzend wirkender ethylenisch ungesättigter Monomeren enthalten. Beispiele für solche vernetzend wirkenden Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, mehrfach ungesättigte heterocyclische Verbindungen, polyfunktionelle Vinylverbindungen, wie Alkylendiol-di(meth)-acrylate, Polyester-di(meth)-acrylate, Divinylbenzol, Trivinylbenzol, Trivinylcyanurat, Triallylcyanurat, Allyl-(meth)-acrylat, Diallylmaleat, Diallylfumarat, Triallyphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Das kautschukmodifizierte Pfropfpolymerisat B wird im Falle der Herstellung mittels Masse- oder Lösungs- oder Masse-Suspensionspolymerisation erhalten durch Pfropfpolymerisation von 50 bis 99, bevorzugt 65 bis 98, besonders bevorzugt 75 bis 97 Gew.-Teilen eines Gemischs aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 2 bis 15, insbesondere 2 bis 13 Gew.-Teilen der Kautschukkomponente B.2.

Der mittlere Teilchendurchmesser d₅₀ der gepfropften Kautschukteilchen weist im Allgemeinen Werte von 0,05 bis 10 µm, vorzugsweise 0,1 bis 5 µm, besonders bevorzugt 0,2 bis 1 µm auf.

Der mittlere Teilchendurchmesser d₅₀ der resultierenden gepfropften Kautschukteilchen, die mittels Masse- oder Lösungs- oder Masse-Suspensionspolymerisationsverfahren erhältlich sind, (ermittelt durch Auszählung an elektronenmikroskopischen Aufnahmen) liegt im Allgemeinen im Bereich von 0,5 bis 5 µm, vorzugsweise von 0,8 bis 2,5 µm.

Die Pfropfcopolymerisate können allein oder in beliebiger Mischung untereinander in Komponente B enthalten sein.

Komponente B ist in der erfindungsgemäßen Polymer-Zusammensetzung vorzugsweise in einer Menge von 0,5 bis 50 Gew.-Teilen, besonders bevorzugt von 1 bis 40 Gew.-Teilen und ganz besonders bevorzugt von 1 bis 35 Gew.-Teilen enthalten.

Als Komponente C) enthalten die Zusammensetzungen erfindungsgemäß Kohlenstoff-Nanofibrillen

Bevorzugte Kohlenstoff-Nanofibrillen haben typischerweise die Form von Röhren, die aus Graphit-Schichten gebildet werden. Die Graphitlagen sind in konzentrischer Art um die Zylinderachse angeordnet.

Kohlenstoff-Nanofibrillen haben einen Längen-zu-Durchmesserverhältnis von wenigstens 5, vorzugsweise von mindestens 100, besonders bevorzugt von mindestens 1000. Der Durchmesser der Nanofibrillen liegt typischerweise im Bereich von 0,003 bis 0,5 µm, vorzugsweise im Bereich von 0,005 bis 0,08 µm, besonders bevorzugt im Bereich von 0,006 bis 0,05 µm. Die Länge der Kohlenstoff-Nanofibrillen beträgt typischerweise 0,5 bis 1000 µm, vorzugsweise 0,8 bis 100 µm, besonders bevorzugt 1 bis 10 µm. Die Kohlenstoff-Nanofibrillen besitzen einen hohlen, zylinderförmigen Kern, um den die Graphitlagen formal gewickelt sind. Dieser Hohlraum hat typischerweise einen Durchmesser von 0,001 bis 0,1 µm, bevorzugt einen Durchmesser von 0,008 bis 0,015 µm. In einer typischen Ausführungsform der Kohlenstoff-Nanofibrillen besteht die Wand der Fibrille um den Hohlraum beispielsweise aus 8 Graphitlagen. Die Kohlenstoff-Nanofibrillen können dabei als Aggregate von bis zu 1000 µm Durchmesser, vorzugsweise bis zu 500 µm Durchmesser aus mehreren Nanofibrillen vorliegen. Die Aggregate können die Form von Vogelnestern, von gekämmtem Garn oder von offenen Netzstrukturen besitzen.

Die Zugabe der Kohlenstoff-Nanofibrillen kann vor, während oder nach der Polymerisation der Monomere zum Thermoplasten der Komponte A) erfolgen. Erfolgt die Zugabe der erfindungsgemäßen Nanofibrilen nach der Polymerisation, so erfolgt sie vorzugsweise durch Zugabe zur Thermoplastenschmelze in einem Extruder oder in einem Kneter. Durch den Compoundiervorgang im Kneter oder Extruder können insbesondere die bereits beschriebenen Aggregate weitgehend oder sogar vollständig zerkleinert werden und die Kohlenstoff-Nanofibrillen in der Thermoplastenmatrix dispergiert werden.

In einer bevorzugten Ausführungsform können die Kohlenstoff-Nanofibrillen als hochkonzentrierte Masterbatche in Thermoplasten, die bevorzugt aus der Gruppe der als Komponente A) eingesetzten Thermoplaste gewählt werden, zudosiert werden. Die Konzentration der Kohlenstoff-Nanofibrillen in den Masterbatchen liegt im Bereich von 5 bis 50, bevorzugt 8 bis 30, besonders bevorzugt im Bereich von 12 bis 22 Gew.-%. Die Herstellung von Masterbatchen ist beispielsweise in US-A 5643502 beschrieben. Durch den Einsatz von Masterbatchen kann insbesondere die Zerkleinerung der Aggregate verbessert werden. Die Kohlenstoffnanofibrillen können bedingt durch die Verarbeitung zur Formmasse bzw. Formkörper in der Formmasse bzw. im Formkörper kürzere Längenverteilungen als ursprünglich eingesetzt aufweisen.

Kohlenstoff-Nanofibrillen werden beispielsweise von der Fa. Hyperion Catalysis oder der Fa. Applied Sciences Inc. angeboten. Die Synthese der Kohlenstoff-Nanofibrillen erfolgt beispielsweise in einem Reaktor, der ein Kohlenstoff enthaltendes Gas und einen Metallkatalysator enthält, wie es z.B. in US-A 5643502 beschrieben wird.

Als Komponente D) enthalten die Zusammensetzungen erfindungsgemäß teilchenförmige Kohlenverbindungen wie Ruß, der zur Herstellung von Leitfähigkeit geeignet ist und vom Fachmann auch als Leitfähigkeitsruß bezeichnet wird, oder Graphitpulver.

Erfindungsgemäß handelt sich bei Graphitpulvern um zerkleinerten Graphit. Unter Graphit versteht der Fachmann eine Modifikation des Kohlenstoffs wie sie beispielweise in A.F. Hollemann, E. Wieberg, N. Wieberg, "Lehrbuch der anorganischen Chemie", 91.-100. Aufl., S. 701-702 beschrieben ist. Graphit besteht aus planaren Kohlenstoffschichten, die übereinander angeordnet sind.

Graphit kann erfindungsgemäß beispielsweise durch Mahlen zerkleinert werden. Die Partikelgröße liegt im Bereich von 0,01 µm bis 1 mm, bevorzugt im Bereich von 1 bis 300 µm, am meisten bevorzugt im Bereich von 2 bis 20 µm.

Bei erfindungsgemäße Leitfähigkeitsrußen die Primärteilchengröße liegt zwischen 0,005 und 0,2 µm, bevorzugt zwischen 0,01 und 0,1 µm. Die Dibutylphthalat-Adsorption der Leitfähigkeitsruße, liegt zwischen 40 und 1000 ml pro 100 g Ruß, bevorzugt zwischen 90 und 600 ml pro 100g Ruß. Auf der Rußoberfläche können eine Vielzahl von sauerstoffhaltigen Gruppen, wie zum Beispiel Carboxyl-, Lactol-, Phenolgruppen, chinoide Carbonylgruppen und/oder Pyronstrukturen befinden.

Leitfähigkeitsruße können beispielsweise aus Acetylen, aus Synthesegas oder aus dem Furnace-Process aus Öl, Trägergase und Luft hergestellt werden. Herstellungsprozesse sind beispielsweise in R.G. Gilg, "Ruß für leitfähige Kunststoffe" in: Elektrisch leitende Kunststoffe, Hrsg.: H.J. Mair, S. Roth, 2. Aufl., Carl Hanser Verlag, 1989, München, Wien, S. 21 - 36 beschrieben.

Die Zugabe der erfindungsgemäßen Ruße und/oder Graphite kann vor, während oder nach der Polymerisation der Monomere zum Thermoplasten der Komponente A) erfolgen. Erfolgt die Zugabe der erfindungsgemäßen Ruße und/oder Graphite nach der Polymerisation, so erfolgt sie vorzugsweise durch Zugabe zur Thermoplastenschmelze in einem Extruder oder in einem Kneter. Erfindungsgemäß können die Ruße und/oder Graphite auch als hochkonzentrierte Masterbatche in Thermoplasten, die bevorzugt aus der Gruppe der als Komponente A) eingesetzten Thermoplaste gewählt werden, zudosiert werden. Die Konzentration der Ruße und/oder Graphite oder des in den Masterbatchen liegt im Bereich von 5 bis 70, bevorzugt 8 bis 50, besonders bevorzugt im Bereich von 12 bis 30 Gew.-%. Erfindungsgemäß können die Ruße und/oder Graphite zur besseren Dosierbarkeit auch mit Bindemitteln wie beispielsweise Wachsen, Fettsäureestern oder Polyolefinen versetzt sein. Erfindungsgemäß können die Ruße und/oder Graphite auch mit oder ohne zusätzlichen Bindemitteln beispielsweise durch Press- oder Druckverfahren pelletisiert oder granuliert sein, was ebenfalls der besseren Dosierbarkeit dient.

In einer bevorzugten Ausführungsform können auch Mischungen aus mehreren Graphiten, Mischungen aus mehreren Rußen oder Mischungen aus mindestens einem Graphit und mindestens einem Ruß als Komponente D eingesetzt werden.

Erfindungsgemäße Leitfähigkeitsruße können beispielsweise unter dem Namen Ketjenblack von der Fa AKZO Nobel, unter dem Namen Vulcan von der Fa. Cabot oder unter dem Namen Printex von der Fa. Degussa bezogen werden.

Erfindungsgemäße Graphite können als Pulver beispielsweise von der Fa. Vogel & Prenner Nachf., Wiesbaden, Deutschland bezogen werden.

Als Komponente E) enthalten die thermoplastischen Formmassen einen Füllstoff oder Verstärkungsstoff oder eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasem und/oder Glasfasern. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden erfindungsgemäß mineralische teilchenförmige Füllstoffe auf der Basis von Talk, Wollastonit, Kaolin und/oder Glasfasern.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk, Wollastonit oder Kaolin.

Im Falle, dass Komponente B) ein Blockcopolymer ist, enthalten die Blends den mineralischen Füllstoff bevorzugt in einer Menge von 2,5 bis 34, besonders bevorzugt in einer Menge von 3,5 bis 28, am meisten bevorzugt in einer Menge von 5 bis 21 Gew.-Teilen.

Besonders bevorzugt sind auch nadelförmige mineralische Füllstoffe. Unter nadelförmigen mineralischen Füllstoffen wird erfindungsgemäß ein mineralischer Füllstoff mit stark ausgeprägtem nadelförmigen Charakter verstanden. Als Beispiel seien nadelförmigere Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER.

Besonders bevorzugt als Komponente E) werden auch mineralische Füllstoffe auf der Basis von Talk. Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, infrage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-% bezogen auf die Gesamtmasse an Füllstoff aufweisen. Die mineralischen Füllstoffe auf Basis von Talk können auch oberflächenbehandelt sein. Sie können beispielsweise mit einem Haftvermittlersystem z.B. auf Silanbasis ausgerüstet sein.

Die erfindungsgemäßen mineralischen Füllstoffe auf Basis von Talk haben bevorzugt eine obere Teilchen- bzw. Korngröße d₉₇ kleiner 50 µm, bevorzugt kleiner 10, besonders bevorzugt kleiner 6 und insbesondere bevorzugt kleiner 2,5 µm. Als mittlere Korngröße d₅₀ wird bevorzugt ein Wert kleiner 10, bevorzugt kleiner 6, besonders bevorzugt kleiner 2 und insbesondere bevorzugt kleiner 1 µm gewählt. Die d₉₇- und d₅₀-Werte von den Füllstoffen D werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe auf Basis von Talk liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Besonders bevorzugt sind erfindungsgemäß auch Glasfasern, die im allgemeinen einen Faserdurchmesser zwischen 7 und 18, bevorzugt zwischen 9 und 15 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Gebräuchliche Silanverbindungen zur Vorbehandlung haben beispielsweise die allgemeine Formel

(X-(CH₂)_{q})ₖ-Si-(O-CᵣH₂ᵣ₊₁)₄₋ₖ

in der die Substituenten folgende.Bedeutung haben:
- x: NH₂-, HO-,

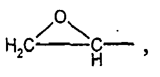

- q: eine ganze Zahl von 2 bis 10, bevorzugt 3 bis 4
- r: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die eintsprechenden Silane, welche als Substituent X eine Glycidylgruppe enthalten.

Die Silanverbindungen werden im allgemeinen in Mengen von 0,05 bis, vorzugsweise 0,5 bis 1,5 und insbesondere 0,8 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d₉₇- bzw. d₅₀-Wert aufweisen als die ursprünglich eingesetzten Füllstoffe. Die Glasfasern können bedingt durch die Verarbeitung zur Formmasse bzw. Formkörper in der Formmasse bzw. im Formkörper kürzere

Längenverteilungen als ursprünglich eingesetzt auf.

Die Teilchendurchmesser am fertigen Produkt können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden.

Als Komponente F) können die erfindungsgemäßen Zusammensetzungen darüber hinaus Verträglichkeitsvermittler enthalten. Verträglichkeitsvermittler werden vorzugsweise thermoplastische Polymere mit polaren Gruppen eingesetzt. Erfindungsgemäß kommen Polymere zum Einsatz, die
- F. 1: ein vinylaromatisches Monomer,
- F.2: wenigstens ein Monomer ausgewählt aus der Gruppe C₂ bis CI₂-Alkylmethacrylate, C₂- bis CI₂-Alkylacrylate, Methacrylnitrile und Acrylnitrile und
- F.3: α,β-ungesättigte Komponenten enthaltend Dicarbonsäureanhydride enthalten.

Als vinylaromatische Monomere F.1 ist Styrol besonders bevorzugt.

Für die Komponente F.2 ist besonders bevorzugt Acrylnitril.

Für α,β-ungesättigte Komponenten enthaltend Dicarbonsäureanhydride F.3 ist besonders bevorzugt Maleinsäureanhydrid.

Vorzugsweise werden als Komponente F.1, F.2 und F.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die. Menge an Maleinsäureanhydrid in dem Terpolymer kann in weiten Grenzen schwanken. Vorzugsweise beträgt die Menge 0,.2 bis 5 mol-%. Besonders bevorzugt sind Mengen zwischen 0,5 und 1,5 mol-%. In diesem Bereich werden besonders gute mechanische Eigenschaften bezüglich Zugfestigkeit und Reißdehnung erzielt.

Das Terpolymer kann in an sich bekannter Weise hergestellt werden.

Eine geeignete Methode ist das Lösen von Monomerkomponenten des Terpolymers, z.B. des Styrols, Maleinsäureanlydrids oder Acrylnitrils in einem geeigneten Lösemittel, z.B. Methylethylketon (MEK). Zu dieser Lösung werden ein oder gegebenenfalls mehrere chemische Initiatoren hinzugesetzt. Geeignete Initiatoren sind z.B. Peroxide. Sodann wird das Gemisch für mehrere Stunden bei erhöhten Temperaturen polymerisiert.

Anschließend werden das Lösemittel und die nicht umgesetzten Monomere in an sich bekannter Weise entfernt. Das Verhältnis zwischen der Komponente 0,1 (vinylaromatisches Monomer) und der Komponente D.2, z.B. dem Acrylnitrilmonomet in dem Terpolymer liegt vorzugsweise zwischen 80:20 und 50:50. Um die Mischbarkeit des Terpolymers mit dem Pfropfcopolymer der Komponente B) zu verbessern, wird vorzugsweise eine Menge an vinylaromatischen Monomer F.1 ausgewählt, die der Menge des Vinylmonomeren B. 1 in dem Pfropfcopolymer B entspricht.

Beispiele für erfindungsgemäß einsetzbare Verträglichkeitsvermittler F sind in den EP-A 785 234 und EP-A 202 214 beschrieben. Erfindungsgemäß bevorzugt sind insbesondere die in der EP-A 785 234 genannten Polymere.

Die Verträglichkeitsvermittler können in Komponente D allein oder in beliebiger Mischung untereinander enthalten sein.

Eine weitere, als Verträglichkeitsvernlittler besonders bevorzugte Substanz ist ein Terpolymer von Styrol und Acrylnitril im Gewichtsverhältnis 2,1: 1 enthaltend 1 mol-% Maleinsäureanhydrid.

Die Menge der Komponente F) in den erfindungsgemäßen Polymer-Zusammensetzungen liegt vorzugsweise zwischen 0,5 und 30 Gew.- Teilen, insbesondere zwischen 1 und 20 Gew.- Teilen und besonders bevorzugt zwischen 2 und 10 Gew.-Teilen. Höchst bevorzugt sind Mengen zwischen 3 und 7 Gew.- Teilen.

Darüber hinaus können die erfindungsgemäßen Zusammensetzungen als Komponente G) umfasst ein oder mehrere thermoplastische Vinyl(Co)Polymerisate enthalten.

Geeignete Vinyl(Co)Polymerisate für Komponente G) sind Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- G.1: 50 bis 99, vorzugsweise 60 bis 80 Gew.- Teilen Vinylaromaten und/oder kernsubstituierten Vinyl aromaten (wie Styrol, α-Methylstyrol, p-Methylstyrol, p-Chlorstyrol) und/oder Methacrylsäure-(C₁-C₈)-Alkylester (wie Methylmethacrylat, Ethylmethacrylat, Butylmethacrylat), und
- G.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁₁-C₈)-Alkylester (wie I\lIethylmethacrylat, n-Butylacrylat, tert.-Butyl-acrylat) und/oder Imide ungesättigter Carbonsäuren (z.B. N-Phenylmaleinimid).

Die (Co)Polymerisate G) sind harzartig, thermoplastisch und kautschukfrei. Besonders bevorzugt ist das Copolymerisat aus G1 Styrol und G.2 Acrylnitril.

Die (Co)Polymerisate G sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Vinyl(Co)Polymerisate können in Komponente E allein oder in beliebiger Mischung untereinander enthalten sein.

Die Komponente E ist in der Polymer-Zusammensetzung vorzugsweise in einer Menge von 0 bis 30 Gew.- Teilen, insbesondere von 0 bis 25 Gew.- Teilen und besonders bevorzugt von 0 bis 20 Gew.-Teilen, insbesondere 0,5 bis 10 Gew.-Teilen enthalten.

Neben den Komponenten A), B), C), D), E), F) und G) können die erfindungsgemäßen Zusammensetzungen darüber hinaus Zusatzstoffe wie z.B. Flammschutzmittel, Zusätzlich können die Polyamidformmassen noch Brandschutzmittel wie z. B. Phosphorverbindungen, organische Halogenverbindungen, Stickstoffverbindungen und/oder Magnesiumhydroxid, Stabilisatoren, Pigmente, Verarbeitungshilfsmittel wie z. B. Gleitmittel, Nukleierungsmittel, kautschukelastische Polymerisate enthalten (oft auch als Schlagzähmodifikator, Elastomer oder Kautschuk bezeichnet) wie z. B. Kautschuke oder Polyolefine u.ä. enthalten.

Als Flammschutzmittel sind handelsübliche organische Verbindungen oder Halogenverbindungen mit Synergisten oder handelsübliche organische Stickstoffverbindungen oder organisch/anorganische Phosphorverbindungen oder roter Phosphor geeignet. Auch Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 geeignet, z.B. Triphenylphosphat (TPP) Resorcinol-bis-(diphenylphosphat) einschließlich Oligomere (RDP) sowie Bisphenol-A-bis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, Zinkverbindungen, Zinnverbindungen wie z.B. Zinnstannat und Borate oder Eisenoxide geeignet. Kohlenstoffbildner und und Tetrafluorethylenpolymerisate können zugesetzt werden.

Darüber hinaus hat sich Magnesiumhydroxid als Flammschutzmittel für Polyamid seit langem bewährt.

Die erfindungsgemäßen Formmassen können übliche Additive, wie Mittel gegen Wärmezersetzung, Mittel gegen Wärmevernetzung, Mittel gegen Beschädigung durch ultrviolettes Licht, Weichmacher, Gleit- und Entformungsmittel, Nukleierungsmittel, Antistatika, ggf. weitere Stabilisatoren enthalten.

Die erfindungsgemäßen Formmassen werden hergestellt, indem man die jeweiligen Bestandteile in bekannter Weise vermischt und bei Temperaturen zwischen 200°C bis 380°C, meist zwischen 250°C und 350°C in üblichen Aggregaten wie z.B. Innenknetern, Extrudern, Doppelwellenschnecken schmelzcompoundiert oder schmelzextrudiert. Bei dem Schmelzcompoundier- oder Schmelzextrudierschritt lassen sich weitere Zusätze wie z.B. Verstärkungsstoffe, Stabilistoren, Gleit- und Entformungsmittel, Nukleierungsmittel, und andere Additive zusetzen.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden, wobei bevorzugt solche Farbmittel eingesetzt werden sollten, die die mechanischen Eigenschaften der Formmasse nicht zu stark beeinträchtigen.

Als Keimbildungsmittel können z.B. Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt Esterwachse, Penterithrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Besonders bevorzugt ist der zusätzliche Einsatz von kautschukelastischen Polymerisaten (oft auch als Schlagzähmodifikator, Elastomer oder Kautschuk bezeichnet).

Gegenstand der Erfindung sind weiterhin ein Verfahren zur Herstellung der Zusammensetzungen, die Verwendung der erfindungsgemäßen Zusammensetzung zur Herstellung von Formkörpern, Formmassen, Halbzeugen und Formteilen sowie daraus hergestellte Formkörpern, Formmassen, Halbzeuge und Formteile.

Die Herstellung der erfindungsgemäßen Zusammensetzungen erfolgt nach an sich bekannten Verfahren durch Mischen der Komponenten. Es kann vorteilhaft sein, einzelne Komponenten vorzumischen. Vorzugsweise geschieht das Mischen der Komponenten A bis E sowie weiterer Bestandteile bei Temperaturen von 220 bis 330°C durch gemeinsames Kneten, Extrudieren oder Verwalzen der Komponenten.

Die erfindungsgemäßen Formmassen und Formkörper besitzen Oberflächenwiderstände im Bereich von 10¹⁵ bis 10¹, bevorzugt im Bereich von 10¹⁴ bis 10³, besonders bevorzugt im Bereich von 10¹² bis 10⁴ Ohm.

Die erfindungsgemäßen Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien genannt Folien und Platten.

Die Formteile können klein- oder großteilig sein und für Außen- oder Innenanwendungen eingesetzt werden. Bevorzugt werden großteilige Formteile für den Fahrzeugbau, insbesondere den Automobilsektor. Insbesondere können aus den erfindungsgemäßen Formmassen Karosserieaußenteile wie z.B. Kotflügel, Heckklappen, Motorhauben, Stoßstangen, Ladeflächen, Abdeckungen für Ladeflächen, Autodächer oder andere Karosserieanbauteile gefertigt werden, die sich hervorragend zu elektrostatischen Lackierung eignen.

Kleinteilige Formteile werden bevorzugt für Dosiereinrichtungen für Aerosole, Pulver oder Granulate, für Chipträger, für Träger oder Verpackungen von Elektronikbauteilen für die Elektro-, Verpackungs- oder Medizintechnologie gefertigt.

Durch Extrusion beispielsweise zu Folien verarbeitete Zusammensetzungen werden bevorzugt in der Verpackungsindustrie oder zum Hinterspritzen eingesetzt.

### Beispiele:

### Komponente A1 :

Lineares Polybutylenterephthalat (Pocan B 1300, Handelsprodukt der Bayer AG, Leverkusen, Deutschland) mit einer Intrinsischen Viskosität von ca. 0,93 cm³/g (gemessen in Phenol : 1,2-Dichlorbenzol = 1:1 bei 25°C)

### Komponente C1 :

Kohlenstoff-Nanofibrillen bzw. Carbon-Nanotubes der Fa. Hyperion Catalysis International, Cambridge, MA 02138, USA. Die Carbon Nanotubes wurden als Masterbatch mit einem Gew.-Anteil von 15% Kohlenstoff-Nanofibrillen in PBT (Pocan B 1300, Handelsprodukt der Bayer AG, Leverkusen Deutschland). Der Masterbatch wurde durch Compoundierung an einem Zweischneckenextruder hergestellt. In den Beispieltabellen ist der tatsächliche Gehalt an Kohlenstoff-Nanofibrillen bezogen auf die Gesamtzusammensetzung angegeben.

### Komponente D1:

Leitfähigkeitsruß des Typs Vulcan XC 72 der Fa Cabot, Suresnes-Cedex, Frankreich. Der Leitfähigkeitsruß wurde als Masterbatch mit einem Gew.-Anteil von von 25 % Leitfähigkeitsruß in PBT (Pocan B 1300, Handelsprodukt der Bayer AG, Leverkusen Deutschland). Der Masterbatch wurde durch Compoundierung an einem Zweischneckenextruder hergestellt. In den Beispieltabellen ist der tatsächliche Gehalt an Leitfähigkeitsruß bezogen auf die Gesamtzusammensetzung angegeben.

### Komponente E1:

Mit silanhaltigen Verbindungen beschlichtete Glasfaser mit einem Durchmesser von 10 µm (CS 7967, Handelprodukt der Bayer Antwerpen N.V., Antwerpen, Belgien)

Als Additive wurden übliche Stabilisatoren, wie handelsübliche Phosphit- und/oder Phosphitesterstabilisatoren und/oder Phosphonat- und/oder Phosphonatesterstabilisatoren, Nukleierungsmittel und Entformungsmittel verwendet.

Compoundierungen erfolgten auf einem Zweiwellenextruder des Typs ZSK32 (Werner und Pfleiderer) bei Massetemperaturen von 260 bis 312°C.

Die Prüfkörper wurden auf einer Spritzgießmaschine des Typs Arburg 320-210-500 bei Massetemperaturen von 250 bis 280°C und Werkzeugtemperaturen von 70 bis 90°C verspritzt.

Die Ausprüfungen der erfindungsgemäßen Formmassen erfolgte nach folgenden Methoden:
- Vicat B:: Wärmeformstabilität bzw. Wärmeformbeständigkeit nach DIN ISO 306/B 120 in Silikonöl.
- Izod-Schlagzähigkeit:: Zähigkeit nach ISO 180 Methode 1 U.
- MVR:: Fließfähigkeit nach DIN/ISO 1133 bei 260°C und 2,16 kg.

Biegemodul, Biegefestigkeit und Randfaserdehnung bei Biegefestigkeit:
Bestimmt nach ISO 178

Oberflächenwiderstand: nach DIN IEC 60093 (12.93) an Rundplatten mit Durchmesser 80 mm und Dicke 2 mm.

Zusammensetzung und Eigenschaften der erfindungsgemäßen thermoplastischen Formmassen gehen aus den Tabellen 1 bis 2 hervor.

Die Beispiele aus Tabelle 1 zeigen für unverstärkte Thermoplaste, dass mit Kohlenstoff-Nanofibrillen (Vgl. 2) zwar gute Leitfähigkeiten realisiert werden können, aber die Fließfähigkeit ist unakzeptabel schlecht. Mit Leitfähigkeitsrußen allein (Vgl. 3) werden bei gleichem Kohlenstoffgehalt zwar akzeptable Fließfähigkeiten realisiert, der Oberflächenwiderstand ist aber unakzeptabel hoch und entspricht etwa dem von nicht additiviertem Thermoplast (Vgl. 1). Durch Kombination von Leitfähigkeitsruß und Kohlenstoffnanofibrillen können bei gleichem Kohlenstoffgesamtgehalt aber akzeptabel niedrige Oberflächenwiderstände und gleichzeitig akzeptabel hohe Fließfähigkeiten realisiert werden (Bsp. 1). Gleichzeitig ist die Schlagzähigkeit bei Bsp. 1 aus einer Kombination aus Leitfähigkeitsruß und Kohlenstoffnanofibrillen höher als bei Vgl. 2, bei dem nur Kohlenstoff-Nanofibrillen eingesetzt werden. Beispiel 1 eignete sich hervorragend zur elektrostatischen Lackierung mit einem lösemittelhaltigen Lacksystem.

Die Beispiele aus Tabelle 2 zeigen für verstärkte Thermoplaste, dass im mit Kohlenstoff-Nanofibrillen (Vgl. 5) zwar gute Leitfähigkeiten realisiert werden können, aber die Fließfähigkeit ist unakzeptabel schlecht. Mit Leitfähigkeitsrußen allein (Vgl. 6) werden bei gleichem Kohlenstoffgehalt zwar akzeptable Fließfähigkeiten realisiert, der Oberflächenwiderstand ist aber unakzeptabel hoch und entspricht etwa dem von nicht additiviertem Thermoplast (Vgl. 4). Durch Kombination von Leitfähigkeitsruß und Kohlenstoffnanofibrillen können bei gleichem Kohlenstoffgesaintgehalt aber akzeptabel niedrige Oberflächenwiderstände und gleichzeitig akzeptabel hohe Fließfähigkeiten realisiert werden (Bsp. 2). Beispiel 2 eignete sich hervorragend zur elektrostatischen Lackierung mit einem lösemittelhaltigen Lacksystem.

| **Tabelle 1** | | **Vgl. 1** | **Vgl. 2 656a** | **Bsp. 1** | **Vgl. 3** |
|---|---|---|---|---|---|
| Komponente A1 | [%] | 99,6 | 95,2 | 95,2 | 95,2 |
| Komponente C1 | [%] | - | 4,4 | 2,4 | - |
| Komponente D1 | [%] | - | - | 2 | 4,4 |
| Additive | [%] | 0,4 | 0,4 | 0,4 | 0,4 |
| Gesamtkohlenstoffgehalt = Komp. C1+Komp. D2 | [%] | | 4,4 | 4,4 | 4,4 |
| MVR (260°C/ 2,16 kg) | [cm³/10min] | 68 | 7 | 26 | 27 |
| Vicat B 120 | [°C] | 197 | 197 | 196 | 194 |
| Izod-Schlagzähigkeit (23°C) | [kJ/m²] | 120 | 26 | 38 | 37 |
| Oberflächenwiderstand | [Ω] | 6·10¹⁶ | 4·10⁴ | 4·10⁷ | 2·10¹⁶ |

| **Tabelle 2** | | **Vgl. 4 654j** | **Vgl. 5654 d** | **Bsp. 26 54e** | **Vgl. 66 54f** |
|---|---|---|---|---|---|
| Komponente A1 | [%] | 68,6 | 65,6 | 65,6 | 65,6 |
| Komponente C1 | [%] | - | 3 | 1,5 | |
| Komponente D1 | [%] | - | | 1,5 | 3 |
| Komponente E1 | [%] | 30 | 30 | 30 | 30 |
| Additive | [%] | 1,4 | 1,4 | 1,4 | 1,4 |
| Gesamtkohlenstoffgehalt = Komp. C1 + Komp. D2 | [%] | 0 | 3,0 | 3,0 | 3,0 |
| MVR (260°C/ 2,16 kg) | [cm³/10min] | 16 | 1 | 6 | 14 |
| Vicat B 120 | [°C] | 216 | 214 | 215 | 214 |
| Izod-Schlagzähigkeit (23°C) | [kJ/m²] | 53 | 46 | 42 | 41 |
| Oberflächenwiderstand | [Ω] | 2·10¹⁶ | 9·10⁴ | 1·10¹³ | 1·10¹⁶ |

## Patentansprüche

1. Zusammensetzungen, enthaltend
A) 99,6 bis 10 Gew.-Teile mindestestens eines Thermoplasten,
B) 0 bis 50 Gew-Teile mindestens eines kautschukelastischen Polymerisats,
C) 0,2 bis 10,0 Gew-Teile Kohlenstoff-Nanofibrillen,
D) 0,2 bis 10,0 Gew.-Teile mindestens einer teilchenförmigen Kohlenstoffverbindung, bevorzugt Ruß oder Graphitpulver,
E) 0 bis 50 Gew.-Teile mindestens eines Füllstoffes und/oder Verstärkungsstoffes, **dadurch gekennzeichnet, dass** als Thermoplast Polycarbonate, Polyamide, Polyester oder Mischungen aus zwei dieser Thermoplasten, bevorzugt eine Mischung aus Polyalkylenterephthalat und Polycarbonat eingesetzt wird.

2. Zusammensetzungen gemäß Anspruch 1, enthaltend
A) 99,0 bis 55 Gew.-Teile mindestens eines Thermoplasten,
B) 5 bis 25 Gew-Teile mindestens eines kautschukelastischen Polymerisats,
C) 1,5 bis 2,5 Gew-Teile Kohlenstoff-Nanofibrillen,
D) 1,5 bis 4,0 Gew.-Teile mindestens einer teilchenförmigen Kohlenstoffverbindung wie Ruß oder Graphitpulver, die als Leitfähigkeitsaddititv geeignet ist,
E) 5 bis 30 Gew.-Teile mindestens eines Füllstoffes und/oder Verstärkungsstoffes.

3. Zusammensetzungen gemäß einem oder mehreren oben genannter Ansprüche, die als Komponente A) mindestens einen Polyester enthält.

4. Zusammensetzungen gemäß einem oder mehreren oben genannter Ansprüche, die als Komponente A) eine Mischung aus Polyalkylenterephthalat und Polycarbonat enthält.

5. Zusammensetzungen gemäß Anspruch 1, die als Komponente A) mindestens ein Polyamid enthält.

6. Zusammensetzungen gemäß einem oder mehreren oben genannter Ansprüche, die als Komponente B) mindestens ein kautschukelastischen Polymerisat enthalten.

7. Zusammensetzungen gemäß einem oder mehreren der vorangegangenen Ansprüche, wobei die Kohlenstoff-Nanofibrillen (c) eine Länge zu Druckmesserverhältnis von mindestens 1000 aufweisen.

8. Zusammensetzungen gemäß einem oder mehreren der vorangegangenen Ansprüche, wobei es sich bei Komponente D um Graphit mit der Partikelgröße im Bereich 0,1 µm bis 1 mm handelt.

9. Zusammensetzungen gemäß einem oder mehreren der vorangegangenen Ansprüche, wobei es sich bei Komponente D um Leitfähigkeitsruß mit einer Primärteilchengröße von 0,005 µm bis 0,2 µm handelt.

10. Zusammensetzungen gemäß einem oder mehreren oben genannter Ansprüche, die als weitere Komponente F) einen Verträglichkeitsvermittler enthalten.

11. Verwendung der Zusammensetzungen gemäß einem oder mehreren oben genannter Ansprüche zur Herstellung von Formteilen.

12. Formteile hergestellt gemäß einem oder mehrerer oben genannter Ansprüche.

13. Formteile gemäß Anspruch 12, **dadurch gekenzeichnet, dass** diese elektrostatisch lackiert werden.

14. Formteile gemäß der Ansprüche 12 oder 13, **dadurch gekennzeichnet, dass** dabei mindestens zwei thermoplastische Materialien, von denen mindestens eines einer Zusammensetzung entsprechend den Ansprüchen 1 bis 10 verbunden werden.

15. Zusammensetzungen und Formteile gemäß einem oder mehrerer der oben genannten Ansprüche, die einen Oberflächenwiderstand von 10¹³ bis 10²Ohm aufweisen.

16. Zusammensetzungen und Formteile gemäß einem oder mehrerer der oben genannten Ansprüche, die einen Oberflächenwiderstand von 10¹⁰ bis 10⁴ Ohm aufweisen.

17. Zusammensetzung gemäß Anspruch 3 mit 0 bis 5 % Füll- oder Verstärkungsstoff E, die gemessen bei 260°C/2,16 kg eine Schmelzvolumenrate (MVR) von mindestens 10 cm³/min aufweisen.

18. Zusammensetzung gemäß Anspruch 3 mit mehr als 5 % Füll- oder Verstärkungsstoff E, die gemessen bei 260°C/2,16 kg eine Schmelzvolumenrate (MVR) von mindestens 5 cm³/min aufweisen.

## Claims

1. Compositions comprising
A) 99.6 to 10 parts by weight of at least one thermoplastic,
B) 0 to 50 parts by weight of at least one rubber-elastic polymer,
C) 0.2 to 10.0 parts by weight of carbon nanofibrils,
D) 0.2 to 10.0 parts by weight of at least one particulate carbon compound, preferably carbon black or graphite powder,
E) 0 to 50 parts by weight of at least one filler and/or reinforcer, **characterized in that** the at least one thermoplastic used comprises polycarbonates, polyamides, polyesters or mixtures of two of these thermoplastics, preferably a mixture of polyalkylene terephthalate and polycarbonate.

2. Compositions according to Claim 1, comprising
A) 99.0 to 55 parts by weight of at least one thermoplastic,
B) 5 to 25 parts by weight of at least one rubber-elastic polymer,
C) 1.5 to 2.5 parts by weight of carbon nanofibrils,
D) 1.5 to 4.0 parts by weight of at least one particulate carbon compound useful as a conductivity additive such as carbon black or graphite powder,
E) 5 to 30 parts by weight of at least one filler and/or reinforcer.

3. Compositions according to one or more of the abovementioned claims, comprising at least one polyester as component A).

4. Compositions according to one or more of the abovementioned claims, comprising a mixture of polyalkylene terephthalate and polycarbonate as component A).

5. Compositions according to Claim 1, comprising at least one polyamide as component A).

6. Compositions according to one or more of the abovementioned claims, comprising at least one rubber-elastic polymer as component B).

7. Compositions according to one or more of the preceding claims, wherein the carbon nanofibrils (c) have a length-to-diameter ratio of at least 1000.

8. Compositions according to one or more of the preceding claims, wherein component D comprises graphite having a particle size in the range from 0.1 µm to 1 mm.

9. Compositions according to one or more of the preceding claims, wherein component D comprises conductivity carbon black having a primary particle size of 0.005 µm to 0.2 µm.

10. Compositions according to one or more of abovementioned claims, comprising a compatibilizer as a further component F).

11. Use of the compositions according to one or more of abovementioned claims for producing moulded articles.

12. Moulded articles produced according to one or more of abovementioned claims.

13. Moulded articles according to Claim 12, **characterized in that** they are electrostatically lacquered.

14. Moulded articles according to Claims 12 or 13, **characterized in that** they comprise at least two thermoplastic materials, of which at least one comprises a composition corresponding to the Claims 1 to 10, being bonded together.

15. Compositions and moulded articles according to one or more of the abovementioned claims, having a surface resistance of 10¹³ to 10² ohms.

16. Compositions and moulded articles according to one or more of the abovementioned claims, having a surface resistance of 10¹⁰ to 10⁴ ohms.

17. Composition according to Claim 3 comprising 0 to 5% of filler or reinforcer material E and having a melt volume rate (MVR) of at least 10 cm³/min when measured at 260°C/2.16 kg.

18. Composition according to Claim 3 comprising more than 5% of filler or reinforcer material E and having a melt volume rate (MVR) of at least 5 cm³/min when measured at 260°C/2.16 kg.

## Revendications

1. Compositions comprenant :
A) de 99,6 à 10 parties en poids d'au moins un thermoplastique,
B) de 0 à 50 parties en poids d'au moins un polymère élastique-caoutchouc,
C) de 0,2 à 10,0 parties en poids de nanofibrilles de carbone,
D) de 0,2 à 10,0 parties en poids d'au moins un composé carboné particulaire, de préférence du noir de carbone ou de la poudre de graphite,
E) de 0 à 50 parties en poids d'au moins une charge et/ou une substance de renforcement, **caractérisées en ce que** l'on utilise, en tant que thermoplastique, des polycarbonates, des polyamides, des polyesters ou des mélanges de deux de ces thermoplastiques, de préférence un mélange de polyalkylène-téréphtalate et de polycarbonate.

2. Compositions selon la revendication 1, comprenant :
A) de 99,0 à 55 parties en poids d'au moins un thermoplastique,
B) de 5 à 25 parties en poids d'au moins un polymère élastique-caoutchouc,
C) de 1,5 à 2,5 parties en poids de nanofibrilles de carbone,
D) de 1,5 à 4,0 parties en poids d'au moins un composé carboné particulaire, de préférence du noir de carbone ou de la poudre de graphite, qui est approprié en tant qu'additif de conductivité,
E) de 5 à 30 parties en poids d'au moins une charge et/ou substance de renforcement.

3. Compositions selon l'une ou plusieurs des revendications précédentes, qui comprennent au moins un polyester en tant que composant A).

4. Compositions selon l'une ou plusieurs des revendications précédentes, qui comprennent un mélange de polyalkylène-téréphtalate et de polycarbonate en tant que composant A).

5. Compositions selon la revendication 1, qui comprennent au moins un polyamide en tant que composant A).

6. Compositions selon l'une ou plusieurs des revendications précédentes, qui comprennent au moins un polymère élastique-caoutchouc en tant que composant B).

7. Compositions selon l'une ou plusieurs des revendications précédentes, dans lesquelles les nanofibrilles de carbone (c) présentent un rapport entre la longueur et le diamètre d'au moins 1 000.

8. Compositions selon l'une ou plusieurs des revendications précédentes, dans lesquelles le composant D est du graphite présentant une taille de particules comprise dans la plage de 0,1 µm à 1 mm.

9. Compositions selon l'une ou plusieurs des revendications précédentes, dans lesquelles le composant D est du noir de carbone de conductivité présentant une taille de particules primaires de 0,005 µm à 0,2 µm.

10. Compositions selon l'une ou plusieurs des revendications précédentes, qui comprennent un promoteur de compatibilité en tant que composant supplémentaire F).

11. Utilisation des compositions selon l'une ou plusieurs des revendications précédentes pour la production de pièces moulées.

12. Pièces moulées selon l'une ou plusieurs des revendications précédentes.

13. Pièces moulées selon la revendication 12, **caractérisées en ce qu'**elles sont pourvues d'un vernis électrostatique.

14. Pièces moulées selon la revendication 12 ou 13, **caractérisées en ce qu'**au moins deux matériaux thermoplastiques, dont au moins un est lié à une composition selon les revendications 1 à 10

15. Compositions et pièces moulées selon l'une ou plusieurs des revendications précédentes, qui présentent une résistance superficielle de 10¹³ à 10² Ohm.

16. Compositions et pièces moulées selon l'une ou plusieurs des revendications précédentes, qui présentent une résistance superficielle de 10¹⁰ à 10⁴ Ohm.

17. Composition selon la revendication 3, comprenant de 0 à 5% d'une charge ou d'une substance de renforcement E et présentant une vitesse volumique de fusion (MVR), mesurée à 260°C/2,16 kg, d'au moins 10 cm³/min.

18. Composition selon la revendication 3, comprenant de 0 à 5% d'une charge ou d'une substance de renforcement E et présentant une vitesse volumique de fusion (MVR), mesurée à 260°C/2,16 kg, d'au moins 5 cm³/min.
